# EUROPÄISCHE PATENTSCHRIFT

(11) **EP 0 568 543 B1**
(45) Veröffentlichungstag und Bekanntmachung des Hinweises auf die Patenterteilung: **15.03.1995**
(21) Anmeldenummer: 92901038.7
(22) Anmeldetag: 22.12.1991
(51) Int. Cl.: B66F 11/04, B63C 5/02, B64F 5/00

(54) **ARBEITSDOCK**
AIRCRAFT-REPAIR DOCK
HANGAR DE REPARATION

(30) Priorität: 11.01.1991 DE 4100648
(43) Veröffentlichungstag der Anmeldung: 10.11.1993
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard
(86) Internationale Anmeldenummer: EP9102492
(87) Internationale Veröffentlichungsnummer: WO9212090

(56) Entgegenhaltungen:
- DE-A- 3 720 239
- FR-A- 1 359 134
- FR-A- 2 142 649
- US-A- 3 256 955
- US-A- 4 668 301

## Beschreibung

Die Erfindung betrifft ein Dock zum Durchführen von Arbeiten an einem Flugzeug gemäß dem Oberbegriff des Anspruches 1.

Ein derartiges Arbeitsdock ist in der DE-A-3 720 239 beschrieben. Es dient zur Durchführung von Arbeiten am Höhen- und Seitenleitwerk eines Flugzeuges. Es besteht aus einem einzigen auf Schienen in seitlicher Richtung verfahrbaren Fachwerk mit zwei übereinanderliegenden höhenverstellbaren Arbeitsbühnen, die sich über die gesamte Länge des Fachwerkes erstrecken. Zum Ein- und Ausdocken des Flugzeuges werden diese Fachwerke in seitlicher Richtung soweit verfahren, daß die Seitenleitwerke zwischen ihnen hindurchbewegt werden können.

US-A-3 256 955 beschreibt ein weiteres Arbeitsdock gemäß dem Oberbegriff des Anspruchs 1.

Für kleinere Wartungs- und Reparaturarbeiten an der Außenhaut von Flugzeugen werden auch fahrbare einstellbare Arbeitskörbe verwendet, mit denen ein Arbeiter an die gewünschte Stelle der Außenhaut gebracht werden kann. Derartige fahrbare Arbeitskörbe sind in der Handhabung sehr flexibel, sie eignen sich aber weniger gut für Arbeiten am ganzen Flugzeug wie Grundüberholungen, bei denen eine große Anzahl von Technikern, typischerweise 80 bis 100 Techniker, eingesetzt werden. Setzt man auch hier fahrbare Arbeitskörbe ein, so können insgesamt nur maximal 10 Arbeitskörbe am Flugzeug arbeiten, die jeweils mit 1 bis 2 Arbeitern besetzt sind und zusätzlich einen Fahrer haben müssen, um Kollisionen mit Sicherheit zu vermeiden. Ein weiterer Nachteil derartiger fahrbarer Arbeitskörbe ist der, daß der von einem langen Ausleger getragene Arbeitskorb nicht spiel- und ruckfrei verstellbar ist, was für die saubere Durchführung flächiger Arbeiten (z.B. Lackieren) nachteilig ist.

Für Grundüberholungen an Flugzeugen werden daher oft feste Gerüste eingesetzt. Das gesamte Flugzeug wird wie ein Haus eingerüstet, und auf den vom Gerüst getragenen Arbeitsbühnen können sich die verschiedenen Arbeiter unabhängig voneinander zur jeweils gewünschten Stelle der Außenhaut bewegen. Das Ein- und Ausrüsten eines Flugzeuges mit einem derartigen Gerüst dauert aber insgesamt etwa 80 bis 90 Stunden, und in dieser Zeit können die Wartungsarbeiter nicht oder nur in geringem Umfange eingesetzt werden.

Es wurde auch schon vorgeschlagen, die Außenhaut von Flugzeugen von Arbeitskörben her zu warten, die über vertikal verstellbare Teleskope an Laufkatzen hängen, die auf an der Gebäudedecke angebrachten Schienen laufen. Eine typische derartige Arbeitskorb-Einheit hat aber ein Gewicht von etwa 15 Tonnen, und möchte man nur die auch bei fahrbaren Arbeitskörben erreichbare Gesamtanzahl von Arbeitskörben realisieren, so wird die Dachkonstruktion mit einem zusätzlichen Gewicht von 150 Tonnen belastet. Da die Laufkatzen sich noch über den höchsten Punkt des Flugzeuges (Seitenruder) hinwegbewegen können müssen, Laufkatze und Schienen hierfür einigen Platz benötigen, muß eine ein solches Dock aufnehmende Halle zusätzlich über die gesamte Fläche mit großer Höhe gebaut werden. Nicht nur die hohen Anforderungen an die Belastbarkeit der Deckenkonstruktion sondern auch das umbaute Volumen machen somit eine derartige Halle teuer, wobei das große Volumen zusätzlich auch noch die laufenden Unterhaltskosten erhöht.

Durch die vorliegende Erfindung soll ein Dock für Arbeiten an der Außenhaut eines Flugzeuges geschaffen werden, welches ein rasches Ein- und Ausdocken des Flugzeuges ermöglicht und einer großen Anzahl von Arbeitern gleichzeitigen sicheren und erschütterungsfreien Zugang zur Außenhaut des Flugzeuges bietet.

Diese Aufgabe ist erfindungsgemäß gelöst durch ein Arbeitsdock gemäß Anspruch 1.

Das erfindungsgemäße Arbeitsdock ist in seiner Grundstruktur einem klassischen Gerüst ähnlich, welches jedoch zum Ein- und Ausdocken nicht abgebrochen werden muß, da ein vorderer oder hinterer Abschnitt der zu beiden Seiten des Flugzeuges stehenden Tragfachwerke in seitlicher Richtung verfahrbar ist, so daß die Tragflügelspitzen zum Ein- und Ausdocken an ihm vorbeilaufen können.

Wird ein erfindungsgemäßes Arbeitsdock auf vorgegebenen Höhen mit jeweils einer Mehrzahl nebeneinander liegender, unabhängig in horizontaler Richtung verschiebbarer Dielen versehen, so kann man um das Flugzeug herum einen formschlüssig anschließenden Arbeitsboden legen. Beim erfindungsgemäßen Arbeitsdock kann man dann das Ausdocken ohne Verstellen dieser Dielen (in der Praxis einige Hundert) durchführen, da die Dielen zusammen mit dem entsprechenden Dockteil in seitlicher Richtung weggefahren werden. Ist das als nächstes einzudockende Flugzeug vom gleichen Typ, so hat man mit dem Zusammenfahren der Hälften des Arbeitsdocks zugleich auch den bis zur Außenhaut konturschlüssig heranreichenden Arbeitsboden. Wird ein Flugzeug anderen Typs eingedockt, so brauchen nur die Konturunterschiede durch Verstellen einzelner der Dielen beim Zusammenfahren der Dockhälften ausgeglichen zu werden. Auch bei diesem Docktyp ergeben sich somit durch die erfindungsgemäße Teilung des Docks erhebliche zeitliche Vorteile beim Ein- und Ausdocken des Flugzeuges.

Mit der Erfindung wird auch erreicht, daß auch zurückspringende und untenliegende Abschnitte der Außenhaut gut erreicht werden.

Die bei einem erfindungsgemäßen Arbeitsdock vorgesehenen verstellbaren Arbeitsbühnen können zugleich auch als Aufzüge verwendet werden, mit denen Ausrüstungsgegenstände direkt zwischen den Rumpftüren des Flugzeuges und dem Hallenboden bewegt werden können. So können die in der Praxis etwa 2 x 4 m großen Arbeitsbühnen zum raschen Abtransportieren der Sitze eines Flugzeuges bei einer Umrüstung oder Generalüberholung dienen. Auch Verkleidungsplatten und andere auszutauschende Teile des Flugzeuginneren lassen sich so leicht zwischen Flugzeug und Hallenboden bewegen.

Vorteilhafte Weiterbildungen der Erfindung sind in Unteransprüchen angegeben.

Mit der Weiterbildung der Erfindung gemäß Anspruch 2 wird erreicht, daß der mittlere Fachwerkabschnitt zugleich die Tragfläche überfahren kann, wobei bei auskragender Anbringung einer Arbeitsbühne zugleich auch große Bereiche der Tragflügelunterseite bequem zugänglich sind.

Bei einem Arbeitsdock gemäß Anspruch 3 kann dieses Überfahren des Tragflügels unter Aufrechterhalten der Arbeiten im vorderen Dockbereich erfolgen.

Die Weiterbildung der Erfindung gemäß Anspruch 4 ist im Hinblick auf die Verwendung des Arbeitsdocks in Verbindung mit Flugzeugen unterschiedlicher Rumpflänge von Vorteil.

Mit einem Arbeitsdock gemäß Anspruch 5 kann man die verschiedenen Außenhautstellen am Heck bei Flugzeugtypen stark unterschiedlicher Heckgeometrie gut erreichen.

Die Weiterbildung der Erfindung gemäß Anspruch 6 ist im Hinblick auf das gleichzeitige Durchführen von Arbeiten am Tragflügel und am mittleren Rumpfabschnitt von Vorteil.

Dabei können bei einem Arbeitsdock gemäß Anspruch 7 oder 8 die innenliegenden und außenliegenden Arbeitsbühnen der mittleren Fachwerkabschnitte unabhängig voneinander verfahren werden.

Eine Anbringung der Arbeitsbühnen an den Tragschlitten der Tragfachwerke über eine Strebenanordnung gemäß Anspruch 9 ist im Hinblick auf hohe Spielfreiheit, hohe Belastungsfähigkeit, große Längenänderung und geringe Kosten von Vorteil.

Bei einem Arbeitsdock gemäß Anspruch 10 hat man eine weitere Verbesserung der Führung und Belastbarkeit und zusätzlich die Möglichkeit, die Arbeitsbühnen durch unterschiedlich große Verstellung der beiden Scherengestänge um die Hochachse zu drehen. Insbesondere kann man so die Arbeitsbühnen für Arbeiten am Radom und an der Tragflächenwurzel parallel zum gerade zu bearbeitenden Bereich der Außenfläche stellen.

Bei einem Arbeitsdock gemäß Anspruch 11 können die Arbeitsbühnen bis unmittelbar an die Tragfachwerke herangefahren werden.

Bei einer Anbringung der Arbeitsbühnen an den Scherengestängen gemäß Anspruch 12 kann man die Arbeitsbühnen bis auf den Boden der mit dem Arbeitsdock ausgerüsteten Halle absenken.

Bei einem Arbeitsdock gemäß Anspruch 13 kann man durch Verblocken zweier benachbarter Arbeitsbühnen eine vergrößerte Arbeitsbühne herstellen.

Die Weiterbildung der Erfindung gemäß Anspruch 14 ist im Hinblick auf ein preisgünstiges Herstellen der Vertikalführungsrahmen von Vorteil. Die Gabelführungen für Gabelstapler werden in großen Stückzahlen hergestellt und zeichnen sich durch eine auch für die Zwecke der vorliegenden Erfindung gut ausreichende mechanische Festigkeit aus.

Mit der Weiterbildung der Erfindung gemäß Anspruch 15 wird erreicht, daß man für sämtliche Arbeiten um das Flugzeug herum vergleichbare Arbeitsbühnen zur Verfügung hat, was die Ersatzteillagerung für die Arbeitsbühnen erleichtert und eine gleiche Bedienung aller Arbeitsbühnen gewährleistet. Da auch bei diesen fahrbaren Arbeitsbühnen die horizontale Beweglichkeit gegeben ist, kann man mit ihnen hervorragend Unterseiten der Tragflächen und bei Nicht-Standard-Flugtypen über das Dock überstehende Rumpfbereiche bearbeiten.

Gemäß Anspruch 16 erhält man einen den Rumpf umströmenden Luftvorhang, der Lacktröpfchen und Schmutz wegträgt, wobei die diesen abgebenden Verteilerkanäle für das Ein- und Ausdocken eine Gasse für das Seitenleitwerk freigeben.

Bei dem Dock nach Anspruch 17 ist der Arbeitsraum des Docks, ggf. mit dem dort unterhaltenen Luftvorhang, gegen den Rest der Wartungshalle und damit gegen andere Arbeitsdocks durch einen scharfen Luftvorhang abgeschlossen (Luftwand).

Die Weiterbildung der Erfindung gemäß Anspruch 18 ist im Hinblick auf das Vermeiden von Verbindungsstellen zur gebäudefesten Installation vo Vorteil.

Nachstehend wird die Erfindung anhand von Ausführungsbeispielen unter Bezugnahme auf die Zeichnung näher erläutert. In dieser zeigen:
- Figur 1:: eine perspektivische, teilweise weggebrochene Ansicht einer Flugzeug-Wartungshalle mit einem ein schnelles Ein- und Ausdocken eines Flugzeuges gestattenden geteilten Arbeitsdock;
- Figur 2:: eine perspektivische Ansicht des linken seitlichen und hinteren Dockteiles des Docks nach Figur 1;
- Figur 3:: eine vergrößerte perspektivische Ansicht des vorderen Abschnittes des linken seitlichen Dockteils;
- Figur 4:: eine vergrößerte perspektivische Ansicht des mittleren Abschnittes des linken seitlichen Dockteils;
- Figur 5:: eine vergrößerte perspektivische Ansicht des hinteren Abschnittes des seitlichen linken Dockteils;
- Figur 6:: eine vergrößerte perspektivische Darstellung des hinteren Dockteils;
- Figur 7:: einen Längsschnitt durch eine andere Wartungshalle für Flugzeuge mit einem abgewandelten Arbeitsdock; und
- Figur 8:: einen transversalen Schnitt durch eine Flugzeug-Wartungshalle mit einem geteilten Arbeitsdock, welches nur schematisch wiedergegeben ist, um Einzelheiten eines Luftführungssystems besser zeigen zu können.

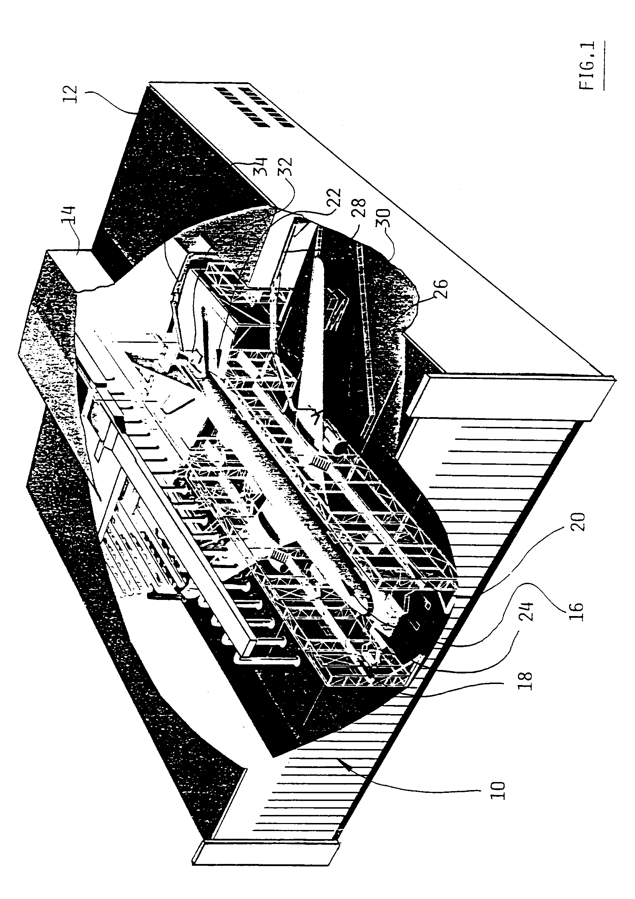

In Figur 1 ist eine Wartungshalle für Flugzeuge insgesamt mit 10 bezeichnet. Ihr Dach 12 hat einen hochgezogenen mittleren Dachabschnitt 14.

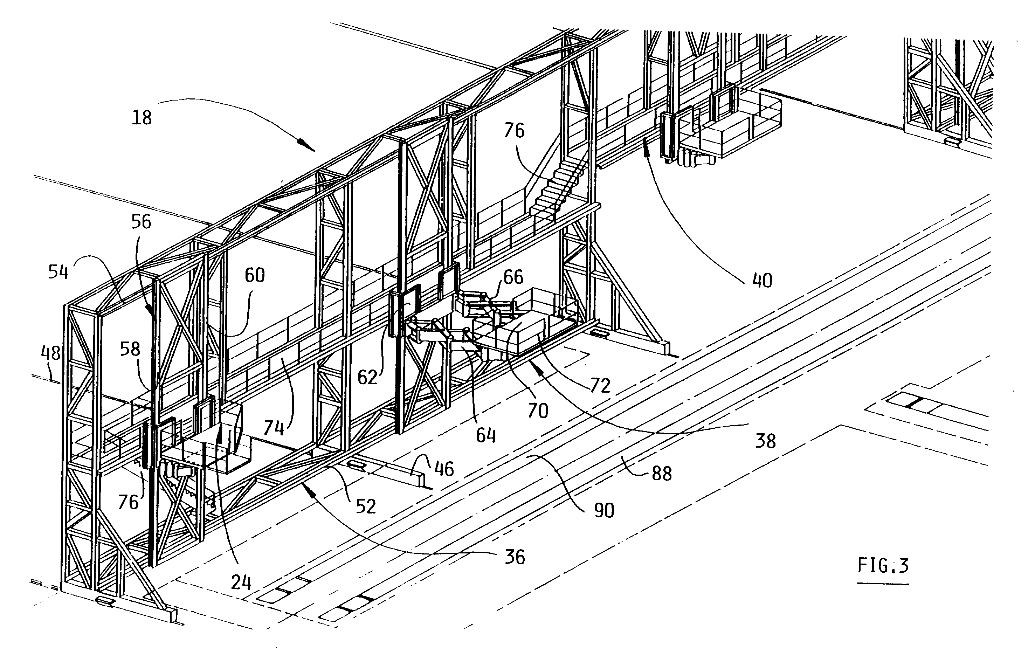

In der Halle ist ein Flugzeug 16 wiedergegeben. Die verschiedenen Stellen der Außenhaut seines Rumpfes sind zugänglich über zwei insgesamt mit 18 und 20 bezeichnete seitliche Dockteile sowie ein hinteres Dockteil 22. Die Dockteile 18, 20, 22 tragen mehrere in bezogen auf den Rumpf in Längsrichtung und transversaler Richtung sowie vertikaler Richtung bewegbarer Arbeitsbühnen 24. Dabei ist die Randkontur der vordersten Arbeitsbühnen 24 der Bugkontur angepaßt, wie aus Figur 1 und Figur 3 gut ersichtlich. Zur Durchführung von Arbeiten an der Oberseite der Tragflügel sind weitere Arbeitsbühnen 26 von langen einstellbaren Auslegern 28 getragen, deren Fußpunkt am Boden der Wartungshalle 10 befestigt ist. Zum Durchführen von Arbeiten an der Unterseite der Tragflächen sind höhenverstellbare fahrbare Arbeitsbühnen 30 vorgesehen.

Im Bereich des hinteren Dockteils 22 sind weitere Arbeitsbühnen 32 von Auslegern 34 getragen, deren Fußpunkte wieder mit dem Hallenboden oder dem Dockteil 22 verbunden sind.

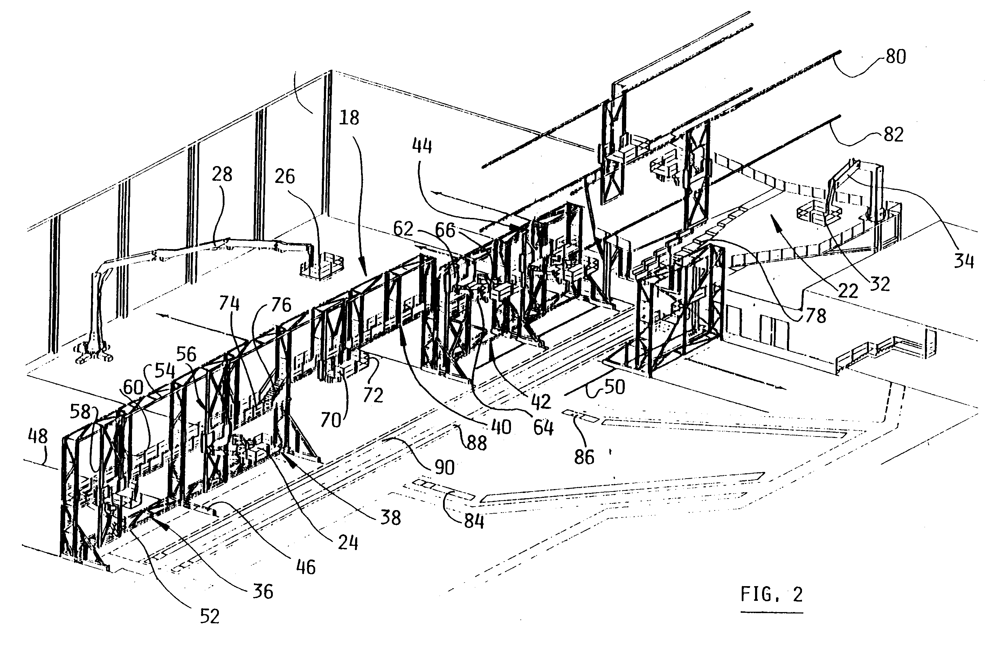

Wie aus Figur 2 ersichtlich, ist das Dockteil 20 eine Fachwerkkonstruktion aus Eisenträgern mit Fachwerkfeldern 36 bis 44, die transversale Fußbalken 46 aufweisen. In letzteren sind in der Zeichnung nicht erkennbar Laufräder untergebracht, die auf transversalen Schienen 48 laufen und von ebenfalls nicht dargestellten Antrieben in Drehung versetzt werden können.

Bei dem in Figur 2 gezeigten Ausführungsbeispiel sind die Fachwerkfelder 36 bis 42 zu einer Einheit verbunden, während das Fachwerkfeld 44 unabhängig verfahrbar ist. Der seitliche Verstellweg der durch die Fachwerkfelder 36 bis 42 gebildeten vorderen Dockeinheit ist so groß, daß die Enden der Tragfläche des Flugzeuges 16 unbehindert an der Innenseite des Dockteiles 18 vorbeilaufen können. Der Fahrweg des hinteren Fachwerkfeldes 44 ist so groß bemessen, daß dieses Fachwerkfeld vollständig aus der Bahn des hinteren Dockteils 22 bewegbar ist, welches seinerseits auf in Längsrichtung verlaufenden Schienen 50 verfahrbar ist.

Ein unterer innerer Längsträger 52 sowie ein oberer innerer Längsträger 54 der verschiedenen Fachwerkfelder dient jeweils als horizontale Führungsschiene für einen Vertikalführungsrahmen 56 mit seitlichen vertikalen Rahmenträgern 58, 60. Auf den Rahmenträgern 58, 60 läuft jeweils ein Tragschlitten 62, an welchem über zwei beabstandete Scherengestänge 64, 66 jeweils eine Arbeitsbühne 24 angebracht ist.

Die Arbeitsbühnen 24 haben jeweils einen Boden 70 sowie ein diesen umgebendes Gitter 72.

In Figur 2 nicht gezeigte Antriebe sind vorgesehen, um die Vertikalführungsrahmen 56 auf den Längsträgern 52, 54 in Rumpflängsrichtung, die Tragschlitten 62 auf den Vertikalführungsrahmen 56 in vertikaler Richtung und die beiden Scherengestänge 64, 66 in Querrichtung des Rumpfes zu verstellen. Werden die Scherengestänge 64, 66 um gleiche Strecken vergrößert oder verkleinert, so bewegt sich die Arbeitsbühne 24 in unveränderter Orientierung (Winkelstellung bezogen auf die Hochachse) auf den Rumpf zu bzw. von diesem weg. Werden die Scherengestänge 64, 66 um unterschiedliche Strecken verlängert bzw. verkürzt, so ergibt sich eine Drehung der Arbeitsbühne 24 um die Hochachse und zugleich eine seitliche Bewegung in Rumpflängsrichtung. Damit kann eine Arbeitsbühne 24 effektiv in Längsrichtung über das Ende des zugeordneten Fachwerkfeldes hinausbewegt werden.

An den Vertikalführungsschlitten 56 sind in der Zeichnung nicht wiedergegebene Gegengewichte vorgesehen, die das Gewicht der Tragschlitten 62, der Scherengestänge 64, 66 und der Arbeitsbühne 24 sowie das Durchschnittsgewicht eines Arbeiters mit durchschnittlicher Arbeitsausrüstung ausgleichen. Damit braucht der Antrieb für das vertikale Verstellen der Arbeitsbühne keine große Leistung zu erbringen, er kann so auch besonders gut ruckfrei arbeiten.

Die in der Zeichnung nicht wiedergegebenen Antriebe zum vertikalen Verstellen der Arbeitsbühnen 24 und die Antriebe zum Verstellen der Gelenkscheren 64, 66 sind vorzugsweise mit Motoren ausgestattet, die unter Phasenanschnitt angesteuert werden. Auch dies ist im Hinblick auf ein sanftes und ruckfreies Bewegen der Arbeitsbühnen von Vorteil. Stattdessen oder zusätzlich kann man in die Kraftübertragungsstrecke zwischen den entsprechenden Motoren und ihrer Last Kurbeltriebe einfügen, um ein nochmals sanfteres Verstellen in vertikaler und horizontaler Richtung aus einer vorgegebenen Ruhestellung heraus bewerkstelligen zu können. Um den entsprechenden Nullpunkt einstellen zu können, können zwischen diesen Kurbeltrieben und dem jeweiligen Antriebsmotor Schaltkupplungen vorgesehen werden.

Es versteht sich, daß bei starr verbundenen benachbarten Fachwerkfeldern gleicher Geometrie die Längsträger 52 und 54 durchlaufen, so daß sich die entsprechenden Vertikalführungsrahmen 56 über beide Fachwerkfelder bewegen lassen, soweit dies die jeweilige Stellung des bzw. der anderen Vertikalführungsrahmen 56 und der von diesem jeweils getragenen Arbeitsbühne 24 zuläßt.

Damit können zwei benachbarte Arbeitsbühnen 24 zusammengefahren werden und durch nicht gezeigte Verriegelungsmittel zu einer großen Arbeitsbühne verbunden werden.

Wie aus Figur 2 ersichtlich, verläuft bei dem Fachwerkfeld 40 der untere Längsträger 52 unter größerem Abstand vom Boden der Wartungshalle, so daß sich die Tragfläche des Flugzeuges frei unter dem Fachwerkfeld 40 hindurcherstrecken kann.

In halber Höhe der Fachwerkfelder 36, 38, 42, 44 sind Verkehrsböden 74 eingezogen, wobei die Niveauunterschiede an den Anschlußstellen zum Fachwerkfeld 40 durch Treppen 76 überwunden werde, ebenso zum Hallenboden.

Wie ebenfalls aus Figur 2 ersichtlich, hat das hintere Dockteil 22 in der Mitte eine zweidimensionale Treppe 78, die der Kontur des Rumpfendes angepaßt ist.

Vertikalführungsrahmen 56 für den Heckbereich des Flugzeuges sind auf horizontalen Führungsschienen 80, 82 verfahrbar, die an der Dachkonstruktion der Wartungshalle befestigt sind.

Markierungen 84, 86 auf dem Boden der Wartungshalle geben die Grenzen vor, innerhalb welcher die Vorderkante bzw. Hinterkante einer Tragfläche liegen müssen, damit sich das Fachwerkfeld 40 unbehindert über die Tragfläche hinwegbewegen kann. Weitere Markierungen 88, 90 geben die Sollbahn für die Bugräder des Flugzeuges vor.

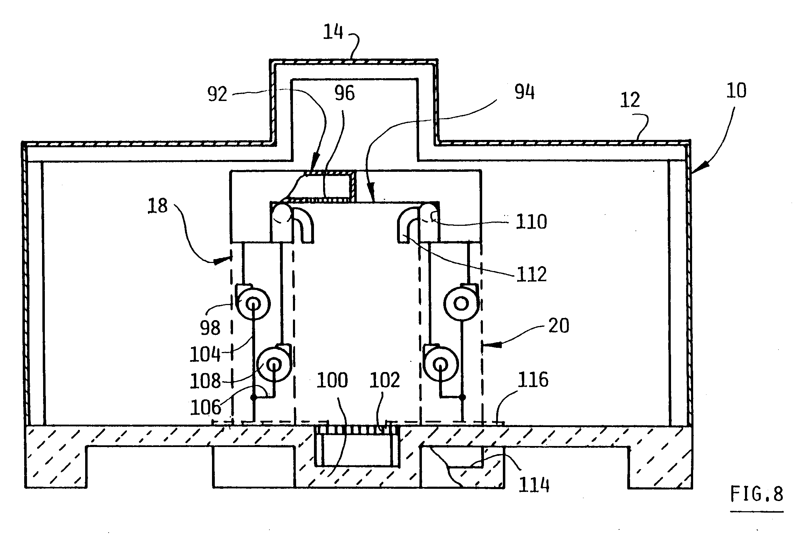

Zum Eindocken eines Flugzeuges geht man folgendermaßen vor:
Die Dockteile 18, 20 werden in seitlicher Richtung auseinandergefahren; das hintere Dockteil 22 wird in seine hinterste Stellung bewegt. Nun wird das Flugzeug rückwärts in die Wartungshalle geschoben, wobei sich die Bugräder auf den Markierungen 88, 90 bewegen. Hat die Vorderkante der Tragflächen die Markierung 84 erreicht, so wird das Flugzeug angehalten und an den zulässigen Stützstellen aufgebockt. Nun werden die jeweils eine einstückige Einheit bildenden Fachwerkfelder 36 bis 42 in seitlicher Richtung auf die Rumpfachse zubewegt, wobei man die Arbeitsbühnen 24 zuvor auf die am weitesten vorstehende Stelle der Außenhaut (im Rumpfbereich: horizontale Rumpfmittelebene) ausgerichtet hat. Unter Einhaltung eines vorgegebenen Zwischenraumes von in der Praxis etwa 10 cm bei Wartungsarbeiten und 30 cm bei Lackierarbeiten (breitere Durchtrittsmöglichkeit für einen Luftvorhang, wie er unter Bezugnahme auf Figur 8 später im einzelnen beschrieben wird), zwischen den Arbeitsbühnen und der Außenfläche des Flugzeuges werden die Fachwerkfelder 36 bis 42 dann zum Stillstand gebracht.

Nun wird das hintere Dockteil 22 auf den Schienen 50 auf das Flugzeugheck zubewegt, bis der gewünschte Abstand zwischen der zweidimensionalen Treppe 78 und der Außenhaut erhalten worden ist. Hat das Flugzeug einen so langen Rumpf, daß das hintere Dockteil 22 nun noch außerhalb der Bahn der Fachwerkfelder 44 liegt, werden letztere anschließend wie oben für die Fachwerkfelder 36 bis 42 beschrieben gegen den Flugzeugrumpf bewegt.

Nunmehr müssen nur noch die verschiedenen Versorgungs- und Entsorgungsleitungen, die in den Fachwerkfeldern 36 bis 44 verlegt sind, über zentrale Schnellkupplungen, die in der Zeichnung nicht wiedergegeben sind, mit entsprechenden hallenfesten Anschlüssen verbunden werden, und das Flugzeug ist fertig eingedockt. Die insgesamt benötigte Eindockzeit beträgt in der Praxis nur wenige Stunden. Nun können die durchzuführenden Arbeiten an der Außenhaut und im Inneren des Flugzeuges durchgeführt werden.

Nach deren Abschluß erfolgt das Ausdocken einfach dadurch, daß die Schnellkupplungen für die Versorgungs- und Entsorgungsleitungen wieder gelöst werden und die Dockteile 18 bis 22 wieder vollständig vom Flugzeug weggefahren werden.

Da die seitlichen Dockteile 18, 20 stets aufgebaut bleiben, kann man in ihnen auch Lager für häufig benötigte Teile unterbringen, die so rasch zugänglich sind.

In Abwandlung des oben beschriebenen Ausführungsbeispieles kann man auch das Fachwerkfeld 42 und das Fachwerkfeld 40 als getrennt bewegbare Dockteile ausbilden. Man kann dann mit dem Fachwerkfeld 40 in seitlicher Richtung über die Tragfläche hinwegfahren und von der entsprechenden Arbeitsbühne 24 aus dort Arbeiten vornehmen. Durch unterschiedliches Einstellen der Scherengestänge 64, 66 dieser Arbeitsbühne läßt sich letztere auch unter recht breite Randbereiche der Tragfläche fahren, die somit ebenfalls vom Dock aus gewartet werden können. Bei einer solchen Dockkonstruktion kann man dann auch auf der in Figur 2 links gelegenen Außenseite des Fachwerkfeldes 40 einen Vertikalführungsrahmen und eine Arbeitsbühne vorsehen. Durch ein Ausfahren der Scherengestänge 64, 66 für die innenliegende Arbeitsbühne 24, welche synchron zur Auswärtsbewegung des Fachwerkfeldes 40 ist läßt sich dann die außenliegende Arbeitsbühne über die Tragfläche bewegen, wobei die Stellung der innenliegenden Arbeitsbühne 24 unverändert bleibt. Mit der außenliegenden Arbeitsbühne können insbesondere auch hochgekantete Flügelendabschnitte (Winglets) gut erreicht werden.

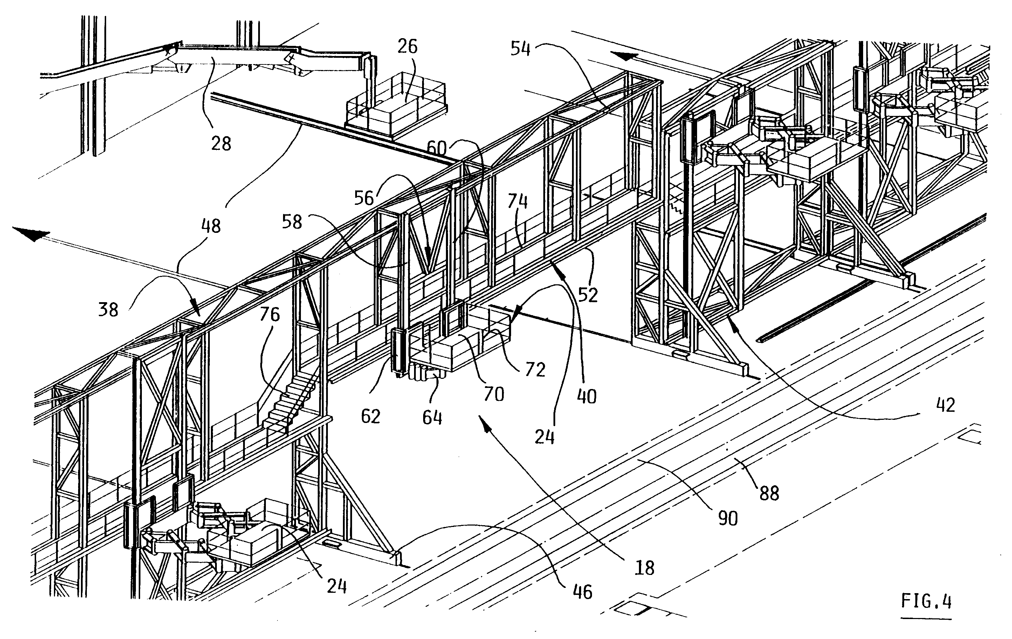

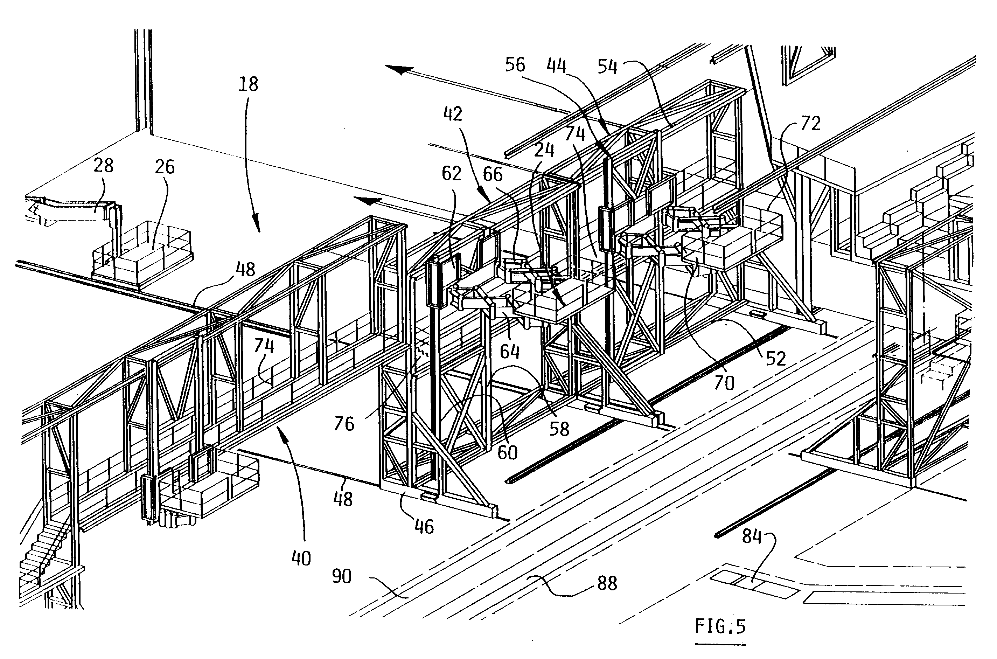

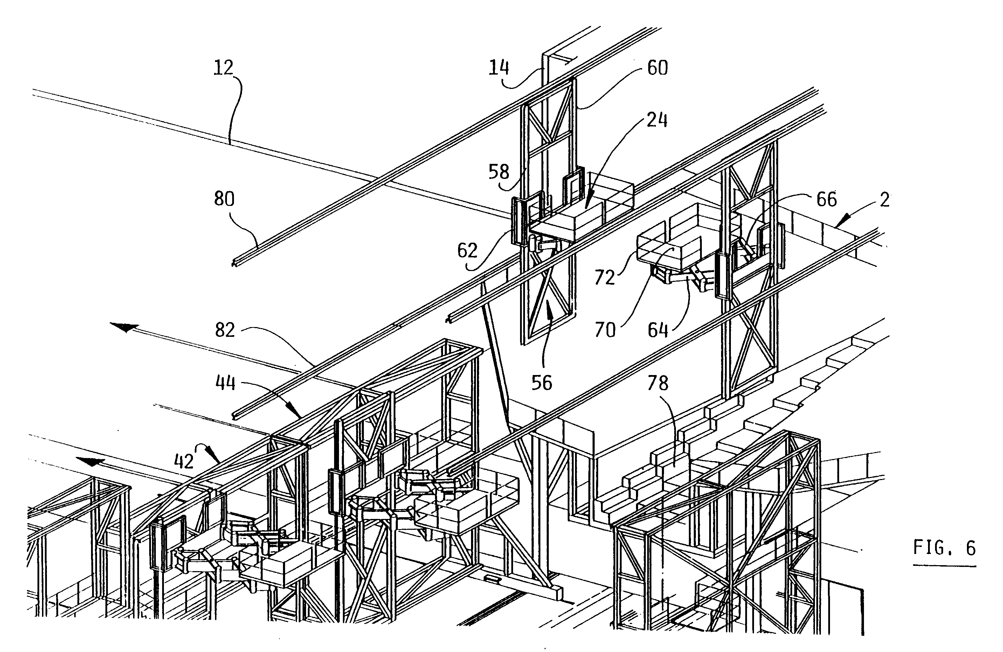

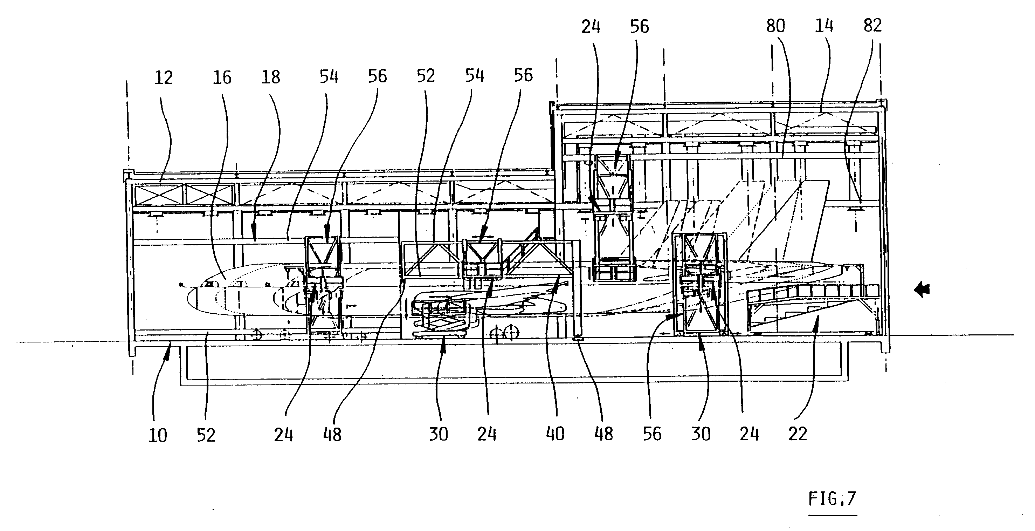

Figur 7 zeigt ein vereinfachtes Arbeitsdock, in welches das Flugzeug mit dem Bug voraus hineinbewegt wird. Dockteile, die obenstehend unter Bezugnahme auf die Figuren 1 bis 6 schon in funktionsäquivalenter Form beschrieben wurden, sind wieder mit denselben Bezugszeichen versehen und brauchen nachstehend nicht nochmals detailliert beschrieben zu werden. Diejenigen Teile der Dockteile 18, 20, von denen aus der vor den Tragflächen liegende Rumpfteil bearbeitet wird, sind fest mit dem Gebäude verbunden. Das dem Tragflächenbereich zugeordnete mittlere Fachwerkfeld 40 ist nun in seitlicher Richtung auf den gebäudefesten Schienen 48 verfahrbar; der hintere Teil des Rumpfes wird von Arbeitsbühnen 24 aus bearbeitet, die auf fahrbaren Vertikalführungsrahmen 56 angeordnet sind. Die Anordnung der hängenden Arbeitsbühnen für den Bereich des Seitenleitwerkes und der benachbarten Rumpfbereich ist gegenüber den Figuren 1 bis 6 unverändert.

Im rechten Teil von Figur 7 ist eine fahrbare Arbeitsbühne 30 wiedergegeben, die auf einem Fahrgestell, z.B. einem Gabelstapler, einen Vertikalführungsrahmen 56 aufweist, wie er auch in den Dockteilen 18, 20 Verwendung findet. Dieser Rahmen trägt über einen Tragschlitten und zwei Scherengestänge eine Arbeitsbühne, die somit genauso verstellt werden kann wie die von den Dockteilen getragene Arbeitsbühne. Dabei wird zwar die Bewegung in Rumpflängsrichtung durch das Fahrgestell bewerkstelligt, dies ist aber für den auf der Arbeitsbühne befindlichen Arbeiter nicht von Interesse; er kann die Arbeitsbühne genauso steuern wie eine von einem Dockteil getragene Arbeitsbühne.

Zum Ausdocken wird beim Ausführungsbeispiel nach Figur 7 das hintere Dockteil 22 aus der Wartungshalle herausgezogen und auf dem Vorfeld seitlich abgestellt. Das dem Tragflächenbereich zugeordnete mittlere Fachwerkfeld 40 des Dockteils 18 wird seitlich gegen die Hallenwand gestellt, und nun kann das Flugzeug aus der Halle geschoben werden.

Zum Eindocken wird das Flugzeug auf der Dockachse soweit in die Halle gezogen, bis die Vorderkante des Flügels das vordere Ende des Durchganges des Fachwerkfeldes 40 erreicht, entsprechend einer der Markierung 84 entsprechenden Markierung. Nun werden die mittleren Fachwerkfelder 40 wie oben beschrieben gegen den Rumpf bewegt und das hintere Dockteil 22 gegen das Heck bewegt. Auch auf diese Weise ist das Ein- und Ausdocken rasch und einfach durchzuführen.

Figur 8 zeigt schematisch ein Luftführungssystem, welches für die oben beschriebenen Wartungshallen verwendbar ist, in den Figuren 1 bis 7 der besseren Übersichtlichkeit halber jedoch weggelassen wurde.

In Figur 8 sind die beiden seitlichen Dockteile 18, 20 nur schematisch gestrichelt angedeutet. Sie tragen am oberen Ende nach oben und innen auskragende und damit die Bewegung der Vertikalführungsrahmen nicht behindernde Luft-Verteilerkanäle 92, 94, die mit nach unten weisenden großflächigen Austrittsgittern 96 versehen sind. Die Verteilerkanäle 92, 94 berühren sich in der am weitesten nach innen gefahrene Stellung der seitlichen Dockteile 18, 20.

Die Verteilerkanäle 92, 94 stehen jeweils mit einen Gebläse 98 in Verbindung, welches vom entsprechenden Dockteil 18, 20 getragen ist und große Luftmengen unter geringem Druck bereitstellt. Diese Luftmengen werden als breiter langsamer Vorhang von der Unterseite der Verteilerkanäle 92, 94 abgegeben und von einem Sammelkanal 100 aufgefangen, der durch ein zwischen den Markierungen 88, 90 liegendes Gitter 102 verschlossen ist. Der Sammelkanal 100 ist über ein schematisch angedeutete Ansaugleitungen 104 mit den Saugseiten der Gebläse 98 und über je eine Zweigleitung 106 derselben mit der Saugseite je eines weiteren Gebläses 108 verbunden.

Die Gebläse 108 erzeugen eine kleinere Luftmenge als die Gebläse 98, die jedoch unter höherem Druck steht. Diese Luft wird jeweils über ein Verteilerrohr 110 in eine Mehrzahl abgewinkelter Lanzen 112 abgegeben, die zusammen einen scharfen, dünnen Luftvorhang bilden, der eine äußere Begrenzung des langsamen breiten Luftstrom vorgibt, der durch die Verteilerkanäle 92, 94 erzeugt wird.

Auf diese Weise ist insgesamt sichergestellt, daß die bei Lackierarbeiten auftretenden Farbnebel ohne Erzeugung von Störströmungen vom Lackierort weggetragen werden und Teile dieses verhältnismäßig langsamen Luftvorhanges nicht vom Arbeitsdock weg zu einem benachbarten Arbeitsdock gelangen können.

Bei dem in Figur 8 gezeigten Arbeitsdock brauchen für das Luftführungssystem keine Verbindungsstellen zu einer gebäudefesten Einrichtung hergestellt zu werden; die Rückführung der Luft vom Sammelkanal 100 zu den Gebläsen 98, 108 kann über je einen nach oben offenen Bodenkanal 114 erfolgen, der sich nur über denjenigen Teilbereich des Verstellweges der seitlichen Dockteile 18, 20 erstreckt, in welchem die Dockteile in ihrer Arbeitsstellung wegen des unterschiedlichen Rumpfdurchmessers verschiedener Flugzeugtypen verstellt werden müssen. Dieser Bodenkanal ist durch jeweils eine Anschlußplatte 116 der Dockteile 18, 20 abgedeckt, die einen mit der Ansaugleitung 104 verbundenen Stutzen trägt.

In Figur 8 ist die Stellung der Dockteile für denjenigen der insgesamt zu wartenden Flugzeugtypen wiedergegeben, welcher den kleinsten Rumpfdurchmesser hat. Bei Flugzeugen mit größerem Rumpfdurchmesser sind die innenliegenden Enden der Verteilerkanäle 92, 94 entsprechend beabstandet. Man erhält aber immer noch einen gleichmäßigen Luftvorhang im Bereich der zu lackierenden überwiegend seitlichen Rumpfflächen.

In Abwandlung des in Figur 8 gezeigten Ausführungsbeispieles kann man die Lanzen 112 auch so anordnen, daß sie den scharfen Luftvorhang im Inneren oder sogar bei der Außenseite der Dockteile 18, 20 erzeugen. An solchen Stellen des Dockteiles, die durch Hindernisse (z.B. Regaleinbauten oder dergleichen) gegen den von den Lanzen 112 erzeugten dünnen und scharfen Luftvorhang abgedeckt sind, kann man lokal zusätzliche Lanzen vorsehen, um hier diesen Luftvorhang zu schließen.

## Patentansprüche

1. Dock zum Durchführen von Arbeiten an einem Flugzeug, mit zu beiden Rumpfseiten angeordneten Tragfachwerken (36 bis 44) und durch diese abgestützten Arbeitsbühnen (24), wobei die Tragfachwerke in seitlicher Richtung von der Dockachse soweit wegfahrbar sind, daß das Flugzeug längs der Dockachse an den Tragfachwerken vorbei ein- bzw. ausdockbar ist, wobei untere Längsträger (52) eines dem Tragflächenbereich des Flugzeuges (16) zugeordneten mittleren Fachwerkfeldes (40) unter so großem Abstand vom Boden der Wartungshalle verläuft, daß sich die Tragfläche des Flugzeuges (16) frei unter diesem Fachwerkfeld (40) hindurcherstrecken kann dadurch gekennzeichnet, daß die Tragfachwerke (36 bis 44) zumindest in einem vor der Tragflächenvorderkante liegenden vorderen Fachwerkfeld (40; Figuren 1 bis 6) oder in einem hinter der Tragflächenhinterkante liegenden hinteren Fachwerkfeld (40; Figur 7) in seitlicher Richtung um mindestens die Tragflächenlänge von der Dockachse wegfahrbar sind und daß die Tragfachwerke (36 bis 44) horizontale Führungsmittel (52, 54) für Vertikalführungsrahmen (56) aufweisen, auf welchen vertikal verfahrbare Tragschlitten (62) laufen, die jeweils eine der Arbeitsbühnen (24) über eine in horizontaler Richtung in ihrer Länge einstellbare Strebenanordnung (64, 66) tragen.

2. Dock nach Anspruch 1, dadurch gekennzeichnet, daß die Tragfachwerke (36 bis 44) in einem von der Vorderkante der Tragfläche bis mindestens zu deren Hinterkante verlaufenden mittleren Fachwerkabschnitt (40) in seitlicher Richtung verfahrbar sind.

3. Dock nach Anspruch 2, dadurch gekennzeichnet, daß die mittleren Fachwerkabschnitte (40) unabhängig von den vorderen bzw. hinteren Fachwerkabschnitten (36, 38; 42, 44) in seitlicher Richtung verfahrbar sind.

4. Dock nach einem der Ansprüche 1 bis 3, dadurch gekennzeichnet, daß es ein in Docklängsrichtung verfahrbares hinteres Dockteil (22) aufweist und die Tragfachwerke (36 bis 44) mindestens einen hinteren Fachwerkabschnitt (44) haben der in seitlicher Richtung aus der Bahn des hinteren Dockteils (22) bewegbar ist.

5. Dock nach Anspruch 4 dadurch gekennzeichnet, daß für den Verstellbereich des hinteren Dockteils (22) vertikale Führungsrahmen (56) mit hierauf laufenden Tragschlitten (62) vorgesehen sind, die auf von einer Hallendeckenkonstruktion getragenen horizontalen Führungsschienen (80, 82) laufen, wobei diese Tragschlitten (62) jeweils über eine in horizontaler Richtung in ihrer Länge einstellbare Strebenanordnung (64, 66) eine Arbeitsbühne (24) tragen.

6. Dock nach einem der Ansprüche 2 bis 5, dadurch gekennzeichnet, daß der mittlere Fachwerkabschnitt (40) auf seiner Außenseite über horizontale Führungsmittel und einen hierauf laufenden Vertikalführungsrahmen und einen auf letzterem laufenden Tragschlitten eine weitere Arbeitsbühne trägt.

7. Dock nach Anspruch 6, dadurch gekennzeichnet, daß die weitere Arbeitsbühne über eine in ihrer Länge einstellbare Strebenanordnung am zugeordneten Tragschlitten angebracht ist.

8. Dock nach Anspruch 6 oder 7, dadurch gekennzeichnet, daß eine Steuerung für einen Servoantrieb der innenliegenden Strebenanordnung (64, 66) vorgesehen ist, welche diese in Abhängigkeit von der seitlich gerichteten Bewegung des mittleren Fachwerkabschnittes (40) so ansteuert, daß die Lage der diesen Arbeitsbühne (24) tragenden freien Enden dieser Strebenanordnung (64, 66) unverändert bleibt.

9. Dock nach einem der Ansprüche 1 bis 8, dadurch gekennzeichnet, daß die Strebenanordnungen durch Scherengestänge (64, 66) gebildet sind.

10. Dock nach Anspruch 9, dadurch gekennzeichnet, daß jede Strebenanordnung zwei beabstandete unabhängig voneinander in ihrer Länge verstellbare Scherengestänge (64, 66) aufweist.

11. Dock nach Anspruch 9 oder 10, dadurch gekennzeichnet, daß die freien Enden der Scherengestänge (64, 66) mit der Unterseite des Arbeitsbühnes (24) an einem solchen Punkt verbunden sind, daß das zusammengeschobene Scherengestänge (64, 66) gerade unter der Arbeitsbühne (24) Platz findet.

12. Dock nach Anspruch 9 oder 10, dadurch gekennzeichnet, daß die freien Enden der Scherengestänge (64, 66) mit der dem Tragfachwerk (36 bis 44) zugewandten Seite der zugeordneten Arbeitsbühne (24) so verbunden sind, daß die Unterseiten der Scherengestänge (64, 66) und die Unterseite der Arbeitsbühne (24) fluchten.

13. Dock nach einem der Ansprüche 1 bis 12, gekennzeichnet durch Mittel zum Verblocken zweier Arbeitsbühnen nach einem Zusammenfahren derselben.

14. Dock nach einem der Ansprüche 1 bis 13, dadurch gekennzeichnet, daß die Vertikalführungsrahmen (56) Standard-Vertikalführungsrahmen für Gabelstapler sind.

15. Dock nach Anspruch 14, dadurch gekennzeichnet, daß mindestens einer der Standard-Vertikalführungsrahmen (56) auf einem Fahrgestell angebracht ist und eine fahrbare Arbeitsbühne (30) bildet.

16. Dock nach einem der Ansprüche 1 bis 15, gekennzeichnet durch seitlich verfahrbare Verteilerkanäle (92, 94), die einen vertikal durch das Dockinnere verlaufenden Luftvorhang kleiner Geschwindigkeit erzeugen und vorzugsweise von den verfahrbaren Dockteilen (18, 20) getragen sind.

17. Dock nach einem der Ansprüche 1 bis 16, gekennzeichnet durch Lanzenanordnungen (112), die in seitlicher Richtung verfahrbar sind und einen im Dockinneren nach unten gerichteten Luftvorhang großer Geschwindigkeit erzeugen, wobei die Lanzenanordnungen (112) vorzugsweise von den Dockteilen (18, 20) getragen sind.

18. Dock nach Anspruch 16 oder 17, dadurch gekennzeichnet, daß die seitlich verfahrbaren Dockteile (18, 20) Gebläse (98, 108) tragen, welche die Verteilerkanäle (92, 94) bzw. die Lanzenanordnungen (112) beaufschlagen.

## Claims

1. Dock for carrying out work on an aircraft, having supporting frameworks (36 to 44) arranged on both sides of the fuselage and working platforms (24) supported by those frameworks, wherein the supporting frameworks can be moved sufficiently far away from the dock axis in the lateral direction that the aircraft can be docked and undocked along the dock axis past the supporting frameworks, wherein bottom longitudinal supports (52) of a middle framework section (40) assigned to the wing region of the aircraft (16) extend at a sufficiently great distance from the floor of the servicing hangar that the wing of the aircraft (16) can extend freely under that framework section (40), characterised in that, at least in a forward framework section (40; Figures 1 to 6) lying in front of the leading edge of the wing or in a rear framework section (40; Figure 7) lying behind the trailing edge of the wing, the supporting frameworks (36 to 44) can be moved away from the dock axis in the lateral direction by at least the length of the wing, and the supporting frameworks (36 to 44) have horizontal guide means (52, 54) for vertical guide frames (56) on which there run vertically displaceable supporting slides (62) supporting in each case one of the working platforms (24) by way of a strut arrangement (64, 66) which is adjustable in length in the horizontal direction.

2. Dock according to claim 1, characterised in that the supporting frameworks (36 to 44) can be moved in the lateral direction in a middle framework section (40) extending from the leading edge of the wing to at least the trailing edge thereof.

3. Dock according to claim 2, characterised in that the middle framework sections (40) can be moved in the lateral direction independently of the forward and rear framework sections (36, 38; 42, 44).

4. Dock according to any one of claims 1 to 3, characterised in that it has a rear dock part (22) which can be moved in the longitudinal direction of the dock, and the supporting frameworks (36 to 44) have at least one rear framework section (44) which can be moved in the lateral direction out of the path of the rear dock part (22).

5. Dock according to claim 4, characterised in that there are provided for the movement range of the rear dock part (22) vertical guide frames (56) with supporting slides (62) running thereon, which guide frames run on horizontal guide rails (80, 82) supported by a hangar ceiling construction, these supporting slides (62) supporting a working platform (24) by way of a strut arrangement (64, 66) which is adjustable in length in the horizontal direction.

6. Dock according to any one of claims 2 to 5, characterised in that the middle framework section (40) carries a further working platform on its outer side by way of horizontal guide means and a vertical guide frame running on those horizontal guide means and a supporting slide running on the vertical guide frame.

7. Dock according to claim 6, characterised in that the further working platform is attached to the associated supporting slide by means of a strut arrangement which is adjustable in length.

8. Dock according to claim 6 or 7, characterised in that a control for a servo drive of the inner strut arrangement (64, 66) is provided which controls that strut arrangement in dependence upon the movement of the middle framework section (40) in the lateral direction, in such a manner that the position of the free ends of the strut arrangement (64, 66) supporting that working platform (24) remains unchanged.

9. Dock according to any one of claims 1 to 8, characterised in that the strut arrangements are formed by scissor rod assemblies (64, 66).

10. Dock according to claim 9, characterised in that each strut arrangement comprises two spaced scissor rod assemblies (64, 66) which are adjustable in length independently of each other.

11. Dock according to claim 9 or 10, characterised in that the free ends of the scissor rod assemblies (64, 66) are joined to the underside of the working platform (24) at such a point that the retracted scissor rod assemblies (64, 66) fit immediately under the working platform (24).

12. Dock according to claim 9 or 10, characterised in that the free ends of the scissor rod assemblies (64, 66) are joined in such a manner to that side of the associated working platform (24) which is towards the supporting framework (36 to 44) that the undersides of the scissor rod assemblies (64, 66) and the underside of the working platform (24) are flush.

13. Dock according to any one of claims 1 to 12, characterized by means for interlocking two working platforms after they have been brought together.

14. Dock according to any one of claims 1 to 13, characterised in that the vertical guide frames (56) are standard vertical guide frames for fork-lift trucks.

15. Dock according to claim 14, characterised in that at least one of the standard vertical guide frames (56) is mounted on an undercarriage and forms a travelling working platform (30).

16. Dock according to any one of claims 1 to 15, characterised by laterally movable distribution channels (92, 94) which produce a low-speed air curtain extending vertically through the interior of the dock and which are preferably carried by the movable dock parts (18, 20).

17. Dock according to any one of claims 1 to 16, characterised by lance arrangements (112) which can be moved in the lateral direction and produce a high-speed air curtain directed downward in the interior of the dock, the lance arrangements (112) preferably being carried by the dock parts (18, 20).

18. Dock according to claim 16 or 17, characterised in that the laterally movable dock parts (18, 20) carry fans (98, 108) which supply air to the distribution channels (92, 94) and the lance arrangements (112).

## Revendications

1. Échafaudage pour l'exécution de travaux sur un avion, comportant des charpentes de support (36 à 44), disposée des deux côtés du fuselage et des plates-formes de travail (24) supportées par ces charpentes, les charpentes de support pouvant être écartées dans une direction latérale de l'axe de l'échafaudage au point que l'avion peut être rentré et sorti le long de l'axe de l'échafaudage, en passant devant les charpentes de support, un longeron inférieur (52) d'une travée médiane (40) de la charpente, associée à la zone d'une surface portante de l'avion (16), s'étendant à une distance si grande du sol du hangar d'entretien que la surface portante de l'avion (16) peut s'étendre librement au-dessous de cette travée (40) de la charpente, caractérisé par le fait que les charpentes de support (36 à 44) peuvent, au moins dans une travée avant de la charpente (40; figures 1 à 6), qui est en avant du bord avant de la surface portante, ou dans une travée arrière de la charpente (40; figure 7), qui est en arrière du bord arrière de la surface portante, être écartées de l'axe de l'échafaudage, dans une direction latérale, d'une distance égale au moins à la longueur de la surface portante, et que les charpentes de support (36 à 46) comportent des moyens horizontaux de guidage (52,54) de cadres de guidage vertical (56), sur lesquels passent des chariots de support mobiles verticalement (62), qui portent chacun l'une des plates-formes de travail (24) par l'intermédiaire d'un dispositif d'entretoisement (64,66) dont la longueur est réglable horizontalement.

2. Échafaudage suivant la revendication 1, caractérisé par le fait que les charpentes de support (36 à 44) sont mobiles dans une direction latérale dans une partie médiane de charpente (40), qui s'étend du bord avant de la surface portante au moins jusqu'au bord arrière de cette surface.

3. Échafaudage suivant la revendication 2, caractérisé par le fait que les parties médianes de charpente (40) sont mobiles dans une direction latérale indépendamment des parties avant ou arrière de charpente (36,38; 42,44).

4. Échafaudage suivant l'une des revendications 1 à 3, caractérisé par le fait qu'il comporte une partie arrière (22) mobile dans la direction longitudinale de l'échafaudage et que les charpentes de support (36 à 44) a au moins une partie arrière de charpente (44), qui est mobile dans une direction latérale en dehors de la trajectoire de la partie arrière (22) de l'échafaudage.

5. Échafaudage suivant la revendication 4, caractérisé par le fait que pour la plage de réglage de la partie arrière (22) de l'échafaudage sont prévus des cadres verticaux de guidage (56), qui sont équipés de chariots de support (62) qui roulent sur ces cadres et qui roulent sur des rails horizontaux de guidage (80, 82), qui sont portés par une construction au plafond du hangar, ces chariots de support (62) portant une plate-forme de travail (24) respectivement par l'intermédiaire d'un dispositif d'entretoisement (64,66) dont la longueur est réglable dans une direction horizontale.

6. Échafaudage suivant l'une des revendications 2 à 5, caractérisé par le fait que la partie médiane de charpente (40) porte, sur son côté extérieur, une autre plate-forme de travail, par l'intermédiaire de moyens horizontaux de guidage et d'un cadre de guidage vertical, qui passe sur ces moyens, et d'un chariot de support qui roule sur ce dernier.

7. Échafaudage suivant la revendication 6, caractérisé par le fait que l'autre plate-forme de travail est montée sur un chariot de support associé, par l'intermédiaire d'un dispositif d'entretoisement dont la longueur est réglable.

8. Échafaudage suivant la revendication 6 ou 7, caractérisé par le fait qu'il est prévu une commande pour un dispositif d'entraînement servocommandé du dispositif intérieur d'entretoisement (64,66) qui commande ce dispositif d'entretoisement en fonction du déplacement, qui s'effectue latéralement, de la partie médiane de charpente (40) de telle sorte que la position des extrémités libres, qui portent cette plate-forme de travail (24), de ce dispositif d'entretoisement (64,66) reste inchangée.

9. Échafaudage suivant l'une des revendications 1 à 8, caractérisé par le fait que les dispositifs d'entretoisement sont formés par des tringleries en forme de ciseaux (64,66).

10. Échafaudage suivant la revendication 9, caractérisé par le fait que chaque dispositif d'entretoisement comporte deux tringleries en forme de ciseaux (64,66), qui sont distantes et dont les longueurs sont réglables indépendamment l'une de l'autre.

11. Échafaudage suivant la revendication 9 ou 10, caractérisé par le fait que les extrémités libres des tringleries en forme de ciseaux (64,66) sont reliées à la face inférieure de la plate-forme de travail (26) en un point tel que la tringlerie en forme de ciseaux (64,66) rétractée trouve sa place exactement au-dessous de la plate-forme de travail (24).

12. Échafaudage suivant la revendication 9 ou 10, caractérisé par le fait que les extrémités libres de la tringlerie en forme de ciseaux (64,66) sont reliées au côté, tourné vers la charpente de support (36 à 44), de la plate-forme de travail associée (24) de telle sorte que les faces inférieures de la tringlerie en forme de ciseaux (64,66) et la face inférieure de la plate-forme de travail (24) sont alignées.

13. Échafaudage suivant l'une des revendications 1 à 12, caractérisé par des moyens pour bloquer deux plates-formes de travail après venue en contact de ces dernières.

14. Échafaudage suivant l'une des revendications 1 à 13, caractérisé par le fait que les cadres de guidage vertical (56) sont des cadres de guidage vertical standards pour des chariots élévateurs à fourche.

15. Échafaudage suivant la revendication 14, caractérisé par le fait qu'au moins l'un des cadres de guidage vertical standards (56) est monté sur une charpente et forme une plate-forme de travail mobile (30).

16. Échafaudage suivant l'une des revendications 1 à 15, caractérisé par des canaux de répartition (92,94), mobiles latéralement et qui produisent un rideau d'air de faible vitesse qui s'étend verticalement à l'intérieur de l'échafaudage, et qui sont portés de préférence par les parties mobiles (18,20) de l'échafaudage.

17. Échafaudage suivant l'une des revendications 1 à 16, caractérisé par des dispositifs à lances (112), qui sont mobiles dans une direction latérale et produisent un rideau d'air de grande vitesse dirigé vers le bas à l'intérieur de l'échafaudage, les dispositifs à lances (112) étant portés de préférence par les parties (18,20) de l'échafaudage.

18. Échafaudage suivant la revendication 16 ou 17, caractérisé par le fait que les parties mobiles latéralement (18,20) de l'échafaudage portent des ventilateurs (98,108), qui alimentent les canaux de répartition (92,94) ou les dispositifs à lances (112).
